# EUROPÄISCHE PATENTSCHRIFT

(11) **EP 3 265 763 B1**
(45) Veröffentlichungstag und Bekanntmachung des Hinweises auf die Patenterteilung: **02.10.2024**
(21) Anmeldenummer: 16707381.6
(22) Anmeldetag: 03.02.2016
(51) Int. Cl.: G01H 3/00, G01H 11/08, G10K 11/00, G10K 11/02

(54) **SCHALLWANDLER ZUM EMPFANGEN VON WASSERSCHALLWELLEN, WANDLERVORRICHTUNG, SONAR UND WASSERFAHRZEUG**
SOUND TRANSDUCER FOR RECEIVING UNDERWATER SOUND WAVES, TRANSDUCER DEVICE, SONAR, AND WATERCRAFT
TRANSDUCTEUR ACOUSTIQUE POUR LA RÉCEPTION D'ONDES SONORES SOUS-MARINES, DISPOSITIF TRANSDUCTEUR, SONAR ET VÉHICULE AMPHIBIE

(30) Priorität: 06.03.2015 DE 102015103304
(43) Veröffentlichungstag der Anmeldung: 10.01.2018
(73) Patentinhaber: ATLAS ELEKTRONIK GmbH, 28309 Bremen (DE)
(72) Erfinder: BUSCH, Rainer, 26131 Oldenburg (DE)
(74) Vertreter: thyssenkrupp Intellectual Property GmbH
(86) Internationale Anmeldenummer: PCT/DE2016/100049
(87) Internationale Veröffentlichungsnummer: WO 2016/141915

(56) Entgegenhaltungen:
- EP-A2- 2 200 017
- CN-Y- 201 368 917
- DE-A1- 102007 045 494
- US-A- 4 488 271
- US-A- 5 436 874

## Beschreibung

Die Erfindung betrifft ein Schallwandler zum Empfangen von Wasserschallwellen nach Anspruch 1, welcher ein akustisches Wandlerelement und eine Abdeckplatte aufweist, wobei die Abdeckplatte eine Aussparung und mindestens einen Parameter aufweist, wobei der Parameter eine Dicke und/oder ein Material und/oder eine geometrische Anordnung der Abdeckplatte ist, und der Abdeckplatte das akustische Wandlerelement derart zugeordnet ist, dass eine Wasserschallwelle sowohl auf die Abdeckplatte als auch auf das akustische Wandlerelement trifft. Weiterhin betrifft die Erfindung eine Wandlervorrichtung nach Anspruch 8 ein Sonar nach Anspruch und ein Wasserfahrzeug nach Anspruch 10.

Auf einem Schallwandler eines Sonars, welches in einem Unterwasserfahrzeug eingebaut ist, wird eine auftreffende Wasserschallwelle aufgrund der Winkelabhängigkeit der Schallreflexion je nach Auftreffwinkel unterschiedlich ausgeprägt reflektiert. Dies hat zur Folge, dass je nach Reflexionswinkel der reflektierte Anteil der einfallenden Wasserschallwelle nicht auf ein akustisches Wandlerelement des Schallwandlers übertragen wird und somit die winkelabhängige Empfindlichkeit eines Schallwandlers vermindert oder dessen Öffnungswinkel verringert wird.

Je nach Einbausituation des Schallwandlers trifft die Schallwelle aus dem Wasser direkt auf das Material des Schallwandlers oder gegebenenfalls zunächst auf einen Raum vor dem Schallwandler auf. Somit hängt die Schallreflexion insbesondere auch vom Material und/oder Medium ab, auf welches die Wasserschallwelle auftrifft.

In Gasen (z. B. Luft) und in Flüssigkeiten (z. B. Wasser) breitet sich Schall als Längs- oder Longitudinalwellen aus. In festem Material erfolgt die Schallausbreitung auch in Form von Transversalwellen (Querwellen) und Biegewellen.

Die Geschwindigkeit, mit der sich Schall im Wasser ausbreitet, ist um den Faktor 2,7 niedriger als in einer Piezo-Keramik, welche häufig als akustisches Wandlerelement in Schallwandlern eingesetzt wird. Hinsichtlich ihrer Schallkennimpedanzen (auch Wellenwiderstand genannt) unterscheiden sich diese beiden Schallausbreitungsmedien Wasser und Piezo-Keramik. Allgemein gilt, bewegt sich eine Schallwelle von einem Medium in ein anderes, so wird diese an der Grenzfläche umso stärker reflektiert, je größer die Differenz der Schallkennimpedanzen beider Medien ist.

Hierbei ist der Schallreflexionsfaktor das Verhältnis von dem Schalldruck der an der Grenzfläche reflektierten Welle zu dem Schalldruck der einfallenden Welle. Dieser lässt sich über das Verhältnis von der Differenz der beiden Schallkennimpedanzen zur Summe der beiden Schallkennimpedanzen berechnen. Bei einer Schallkennimpedanz von 1.440.000Ns/m³ im Wasser und von 30.000.000Ns/m³ in der Piezo-Keramik ergibt sich ein Schallreflexionsfaktor von 0,9. Dies bedeutet, dass 90% des einfallenden Schalldrucks an der Grenzfläche reflektiert wird, da hier die Schallwelle aus dem Wasser kommend gegen die "schallhärtere" Piezo-Keramik läuft.

Bei Auftreffen auf die Grenzfläche kann eine Totalreflexion an der Grenzfläche insbesondere dann auftreten, wenn der Einfallswinkel einen bestimmten Wert, den sogenannten Grenzwinkel der Totalreflexion oder den Glanzwinkel als Komplementwinkel des zwischen Strahlrichtung und Normale auf die reflektierende Fläche liegenden Reflexionswinkels, überschreitet. Die Schallwelle tritt dann nicht mehr in die Piezo-Keramik ein, sondern wird weitgehend reflektiert.

Dies hat zur Folge, dass der reflektierte Anteil der einfallenden Wasserschallwelle nicht auf das akustische Wandlerelement des Schallwandlers übertragen wird, wodurch die Empfindlichkeit des Schallwandlers vermindert ist.

Neben der winkelabhängigen Reflexion kann allgemein auch eine Schallabsorption zu einer Verminderung der Empfindlichkeit eines Schallwandlers führen.

In Unterwasserfahrzeugen ist üblicherweise ein Sonar mit mehreren Schallwandlern eingebaut. Weitere Materialien, welche in der Umgebung des Sonars im Unterwasserfahrzeug eingebaut sind, können auftreffende Schallwellen reflektieren und/oder absorbieren, sodass der auf die Schallwandler des Sonars auftreffende Schalldruck vermindert und die Empfindlichkeit der Schallwandler erniedrigt ist.

Wie oben beschreiben, ist aufgrund der Winkelabhängigkeit die Schallreflexion je nach Auftreffwinkel unterschiedlich ausgeprägt. Neben dem direkten Auftreffen einer Schallwelle auf einem Schallempfänger beispielsweise in einem Bugsonar eines Unterwasserfahrzeuges werden von einem unbekannten Objekt ausgesandte Wasserschallwellen auch am Meeresboden und/oder anderen Objekten im Wasser reflektiert und/oder absorbiert. Dies hat zur Folge, dass die unter Wasser bereits reflektierten Wasserschallwellen mit unterschiedlichen Winkeln und Intensitäten auf einen Schallempfänger auftreffen.

Aufgrund der unterschiedlichen Auftreffwinkel werden die Wasserschallwellen unterschiedlich beim Auftreffen auf denn Schallempfänger reflektiert und somit mit unterschiedlichen Empfindlichkeiten detektiert. Folglich besteht die Gefahr, dass bei starker Reflexion einer Schallwelle eines sendenden, insbesondere unbekanntes Objekt, beim Übertritt zum Schallwandler dieses Schallsignal nicht erfasst wird.

Schallwandler zum Empfangen von Wasserschallwellen sind unter Anderem in US 5 436 874 A, US 4 488 271 A und CN 201 368 917 Y offenbart.

Aufgabe der Erfindung ist es, den Stand der Technik zu verbessern.

Gelöst wird die Aufgabe durch einen Schallwandler zum Empfangen von Wasserschallwellen nach Anspruch 1, welcher ein akustisches Wandlerelement und eine Abdeckplatte aufweist, wobei die Abdeckplatte eine Aussparung und mindestens einen Parameter aufweist, wobei der Parameter eine Dicke und/oder ein Material und/oder eine geometrische Anordnung der Abdeckplatte ist, und der Abdeckplatte das akustische Wandlerelement derart zugeordnet ist, dass eine Wasserschallwelle sowohl auf die Abdeckplatte als auch auf das akustische Wandlerelement trifft, wobei der mindestens eine Parameter derart eingestellt ist, dass bei einer auftreffenden Wasserschallwelle eine Winkelabhängigkeit einer Schallreflexion eingestellt ist, sodass eine winkelabhängige Empfindlichkeit des Schallwandlers erhöht ist.

Über die Parametereinstellung lässt sich bei einer auftreffenden Wasserschallwelle unter anderem die Winkelabhängigkeit der Schallreflexion derart beeinflussen, dass die winkelabhängige Empfindlichkeit des Schallwandlers erhöht wird. Dies ist insbesondere vorteilhaft, wenn die Schallwelle mit einem Auftreffwinkel auf den Schallwandler auftrifft, bei welchem eine starke Reflexion vorliegt.

Zudem können von verschiedenen, unbekannten Objekten ausgesandte Schallwellen oder verschiedene von einem Objekt ausgesandte Schallwellen, welche mit unterschiedlichen Auftreffwinkeln auf den Schallwandler auftreffen, mit annährend gleicher Empfindlichkeit vom Schallwandler detektiert werden.

Somit wird ein Schallwandler bereitgestellt, bei dem die Empfindlichkeit insbesondere bei einem Auftreffwinkel von bevorzugt 30° bis 45° verbessert wird.

Eine Konsequenz der verbesserten winkelabhängigen Empfindlichkeit ist, dass sich somit auch der so genannte Öffnungswinkel vergrößert, z.B. von 90° auf 120° und mehr.

Es hat sich überraschenderweise gezeigt, dass die winkelabhängige Empfindlichkeit des Schallwandlers insbesondere durch mindestens einen Parameter der Abdeckplatte verbessert wird, welcher die Winkelabhängigkeit der auftreffenden Wasserschallwelle beeinflusst. Unerwarteter Weise hat sich gezeigt, dass über die Parametereinstellung der Abdeckplatte die Schallreflexion einer auftreffenden Schallwelle und die (winkelabhängige) Empfindlichkeit des Schallwandlers verbessert werden können.

Ein wesentlicher Gedanke der Erfindung beruht darauf, dass durch Einstellung der Dicke und/oder des Materials und/oder der geometrische Anordnung der Abdeckplatte die Schallreflexion einer auftreffenden Wasserschallwelle so beeinflusst wird, dass die die winkelabhängige Empfindlichkeit des Schallwandlers erhöht wird.

Insbesondere kann es auch vorteilhaft sein, durch Parametereinstellung der Abdeckplatte einen sogenannten Druckstau zu erzeugen, bei dem die Schallwelle auf eine Abdeckplatte trifft, welche größer als die Wellenlänge der Schallwelle ist. Dadurch wird die Schallwelle gleichphasig reflektiert und dicht vor der Abdeckplatte tritt eine maximale Erhöhung des Schalldruckpegels um insbesondere 6dB auf, da sich die Amplituden des einfallenden und reflektierenden Schalls gleichphasig addieren.

### Folgendes Begriffliche sei erläutert:

Ein "Schallwandler" (auch Hydrophon genannt) ist insbesondere eine Vorrichtung, welche ein akustisches Signal als Schallwechseldrücke in ein elektrisches Signal umwandelt oder umgekehrt ein elektrisches Signal in ein akustisches Signal umwandelt. Ein Hydrophon wird insbesondere im Meer unter Wasser eingesetzt, um dort Wasserschallgeräusche aufzunehmen. Hierbei wandelt ein Hydrophon den Wasserschall in eine dem Schalldruck entsprechende elektrische Größe.

Eine "Wasserschallwelle" ist insbesondere eine Schallwelle, welche sich im Wasser als Druckwelle ausbreitet. Technische Anwendung für Wasserschalldruckwellen sind insbesondere die Kommunikation, Navigation und/oder Ortung sowie Messung von physikalischen, chemischen und biologischen Größen. Der verwendete Frequenzbereich kann insbesondere in einem Bereich von ca. 10 Hz bis 1 MHz liegen.

Ein "akustisches Wandlerelement" ist insbesondere ein Bauteil eines Schallwandlers oder eines Hydrophons, welches akustische Signale als Schallwechseldrücke in elektrische Spannung umwandelt oder umgekehrt elektrische Spannung in akustische Signale umwandelt. Als akustisches Wandlerelement werden insbesondere Piezokeramiken eingesetzt.

Eine "Abdeckplatte" ist insbesondere eine Platte, die neben und/oder vor dem akustischen Wandlerelement angeordnet ist. Die Abdeckplatte kann insbesondere Stahl und/oder anderen Metallen aufweisen.

Die Abdeckplatte weist eine "Aussparung" auf, wobei unter Aussparung insbesondere ein Bereich verstanden wird, der nicht von der Abdeckplatte bedeckt ist. Dieser freie Bereich kann insbesondere Luft und/oder im getauchten Fall Wasser aufweisen. Dieser Bereich kann auch von einem akustischen Wandlerelement und/oder einer vorderen und/oder hinteren schalldruckverteilende Platte ausgefüllt sein.

Unter einer "Dicke" der Abdeckplatte wird insbesondere die Materialdicke der Abdeckplatte verstanden, wobei die Dicke die Ausdehnung der Abdeckplatte in vertikaler Richtung, also aus der Richtung des maximal auftreffenden Schalldrucks, darstellt. Die Dicke kann insbesondere homogen mit einer konstanten Materialdicke oder inhomogen ausgeführt sein.

Eine "geometrische Anordnung" der Abdeckplatte ist insbesondere die zweidimensionale Anordnung der Abdeckplatte im Raum in Verbindungen mit der Form und den horizontalen Abmessungen der Abdeckplatte.

Die "Schallreflexion" ist insbesondere das "Zurückwerfen" von Schallwellen an einer Grenzfläche, an der sich der Wellenwiderstand des Ausbreitungsmediums ändert, in das Medium, aus welcher die Schallwelle auf die Grenzfläche aufgetroffen ist.

Unter der "Winkelabhängigkeit" der Schallreflexion wird insbesondere verstanden, dass je nach Auftreffwinkel einer Schallwelle auf eine Grenzfläche, diese an der Grenzfläche reflektiert oder auf das hinter der Grenzfläche folgende Medium übertragen wird.

Die "winkelabhängige Empfindlichkeit eines Schallwandlers" ist insbesondere ein Maß der erzeugten elektrische Spannung bezogen auf den winkelabhängig einwirkenden Schalldruck bei einer bestimmten Frequenz bei einem Schallempfänger oder ein Maß für die angelegte Spannung bezogen auf den erzeugten Schalldruck bei einer bestimmten Frequenz bei einem Schallsender. Die Empfindlichkeit lässt sich insbesondere auch als Übertragungsfaktor angeben, bei dem die Ausgangsspannung (als Leerlaufspannung) im Verhältnis zum einfallenden Schalldruck für einen Empfänger angegeben wird.

In einer weiteren Ausführungsform des Schallwandlers ist die Dicke der Abdeckplatte frequenzabhängig zwischen 0,1mm und 2,0mm, insbesondere zwischen 0,5mm und 1,5mm, eingestellt. Experimentelle Versuche mit unterschiedlich dicken Abdeckplatten haben überraschend gezeigt, dass die Schallreflexion einer auftreffenden Wasserschallwelle eingestellt wird, sodass die winkelabhängige Empfindlichkeit des Schallwandlers erhöht ist.

Hierbei hat sich insbesondere gezeigt, dass eine Dicke der Abdeckplatte von 0,1mm - 2mm vorteilhaft ist. Des Weiteren konnte gezeigt werden, dass es vorteilhaft ist, die Dicke der Abdeckplatte dem Frequenzbereich anzupassen. Beispielsweise ist bei 50kHz eine Dicke einer Abdeckplatte aus Edelstahl von 0,3mm zu wählen, während bei 100 kHz eine Dicke der Abdeckplatte von 0,15mm vorteilhaft für die winkelabhängige Empfindlichkeit des Schallwandlers ist.

Es konnte bestimmt werden, dass die Dickenauswahl der Abdeckplatte ein wichtiger Parameter für die Erhöhung der winkelabhängigen Empfindlichkeit des Schallwandlers ist.

Um die Empfindlichkeit des Schallwandlers zu erhöhen, weist das Material der Abdeckplatte eine mindestens fünfundzwanzigfach größere Schallkennimpedanz als eine Schallkennimpedanz von Wasser auf und/oder das Material umfasst Wolfram und/oder Eisen und/oder Nickel und/oder Molybdän und/oder Chrom und/oder Kobalt und/oder Titan und/oder Mangan.

Durch Versuche mit unterschiedlichen Materialien, deren verschiedenen Anteilen am Material der Abdeckplatte und unterschiedlichen Schallkennimpedanzen der Abdeckplatte hat sich überraschend gezeigt, dass über diesen Parameter die Empfindlichkeit des Schallwandlers erhöht ist.

Insbesondere ist es vorteilhaft, wenn die Schallkennimpedanz der Abdeckplatte mindestens um den Faktor 25 oder mehr höher als die Schallkennimpedanz von Wasser ist. Im Falle einer Wolframplatte als Abdeckung liegt deren Schallkennimpedanz um den Faktor 72 höher als die Schallkennimpedanz von Wasser. Dadurch wirkt die Abdeckplatte als fast idealer Reflektor. Somit wird der Schalldruck vor der Abdeckplatte erhöht.

Auch hat sich gezeigt, dass es insbesondere vorteilhaft ist, wenn das Material der Abdeckplatte (zusätzlich oder ergänzend) eine mindestens zweifach größere Schallkennimpedanz als die einer piezoelektrischen Keramik und/oder Komposit-Keramik aufweist. Beispielsweise weist eine Piezo-Keramik eine Schallkennimpedanz von 30.000.000Ns/m³, während eine Wolframplatte eine Schallkennimpedanz von 104.200.000Ns/m³ aufweist. Somit hat die Wolframplatte eine um den Faktor 3,46 höhere Schallkennimpedanz als die Piezo-Keramik.

Experimentelle Versuche und Simulationen mit unterschiedlichen Materialien der Abdeckplatte haben gezeigt, dass neben Wolfram alle Elemente, die eine ähnliche Schallkennimpedanz zu der von Wolfram aufweisen, eine positive Beeinflussung der Schallreflexion bei einer auf einem Schallwandler auftreffenden Schallwelle bewirken. Weitere geeignete Elemente neben Wolfram sind insbesondere Eisen/Stahl und/oder Nickel und/oder Molybdän und/oder Chrom und/oder Kobalt und/oder Titan und/oder Mangan.

Eine "Schallkennimpedanz" (auch als Wellenwiderstand des Mediums bezeichnet) ist insbesondere eine physikalische Größe, welche über das Verhältnis von Schalldruck zu Schallschnelle definiert ist. Werden Schallwellen vom Wasser auf ein anderes Material übertragen, so werden diese an der Grenzfläche umso stärker reflektiert, je größer die Differenz der Schallkennimpedanzen beider Medien ist.

Unter einer "piezoelektrischen Keramik" und/oder einer "piezoelektrischen Komposit-Keramik" werden insbesondere eine Vollkeramik oder ein Verbundwerkstoff als akustisches Wandlerelement verstanden. Während eine piezoelektrische Keramik eine Vollkeramik ist, besteht eine Piezokomposit-Keramik aus einem Verbundwerkstoff, welcher insbesondere piezoelektrische, keramische Filamente und eine Verfüllmasse aufweist. Beide Keramiken wirken als Piezowandler und erzeugen bei Einwirken eines mechanischen Drucks eine elektrische Spannung oder führen bei Anlegen einer elektrischen Spannung eine mechanische Bewegung aus.

Die keramischen Filamente in der Piezokeramik sind insbesondere dünne und/oder fadenförmige keramische Strukturen. Diese können insbesondere die Form von Stäbchen, Zylindern, Rohren und/oder Platten annehmen. Bei Auftreffen und/oder Aufprägen eines Schalldrucks werden die keramischen Filamente elastisch verformt, wobei eine Änderung der elektrischen Polarisation und somit ein Auftreten einer elektrischen Spannung am keramischen Festkörper erfolgt. Somit ist der Schallwandler in diesem Fall als Schallempfänger ausgebildet.

In einer weiteren Ausführungsform des Schallwandlers weist eine Breite der Abdeckplatte mindestens eine fünffache Breite des akustischen Wandlerelementes auf.

Unter "Breite" wird hier die Abmessung der Abdeckplatte oder des akustischen Wandlerelementes insbesondere in der kürzeren horizontalen Ausrichtung verstanden, während unter Länge insbesondere die längere horizontale Abmessung der Abdeckplatte oder des akustischen Wandlerelementes verstanden wird.

Praktische Versuche mit unterschiedlich breiten Abdeckplatten haben gezeigt, dass eine positive Beeinflussung der Schallreflexion der auftreffenden Schallwelle dann vorliegt, wenn die Breite der Abdeckplatte mindestens eine fünffache Breite des akustischen Wandlerelementes aufweist.

Hierbei muss jedoch nicht die gesamte Breite der Abdeckplatte mit Material der Abdeckplatte ausgeführt sein, sondern die Abdeckplatte weist insbesondere über dem akustischen Wandlerelement eine Aussparung auf.

Beispielsweise ist die Abdeckplatte so angeordnet, dass sie auf der einen Seite zunächst die zweifache Breite eines akustischen Wandlerelements einnimmt, dann folgt die Aussparung in der Breite des akustischen Wandlerelements oberhalb des akustischen Wandlerelements (dies bedeutet hier liegt ein freier, wassergefüllter Bereich vor) und auf der anderen Seite folgt wieder die Abdeckplatte mit der zweifachen Breite des akustischen Wandlerelements. In diesem Fall sitzt das akustische Wandlerelement also unterhalb der Aussparung der Abdeckplatte. Insbesondere sollte seitlich zum Wandlerelement wenigstens die einfache Breite/Länge des akustischen Wandlerelements vorgesehen sein.

Es hat sich jedoch auch gezeigt, dass das akustische Wandlerelement direkt in der Aussparung der Abdeckplatte oder oberhalb der Abdeckplatte sitzen kann und trotzdem eine Erhöhung der Empfindlichkeit des Schallwandlers erzielt wird.

Um die akustischen Eigenschaften weiter zu verbessern und die Bestandteile des Schallwandlers zu verbinden, ist zwischen der Abdeckplatte und der Aussparung und/oder dem akustischen Wandlerelement eine Verfüllmasse angeordnet.

Zur Erhöhung der Stabilität und/oder zum Verkleben kann eine Verfüllmasse zwischen der Abdeckplatte und der Aussparung und/oder dem akustischen Wandlerelement angeordnet sein.

Zudem ist es vorteilhaft, wenn die Verfüllmasse sich optisch transparent verhält.

Unter einer "Verfüllmasse" wird insbesondere eine Masse zum Verfüllen des Raumes zwischen der Abdeckplatte und der Aussparung und/oder dem akustischem Wandlerelement verstanden. Hierbei kann es sich um eine Kunststoffmasse und/oder Kork und/oder einem anderen Verfüllmaterial handeln. Als Kunststoff kann insbesondere Polyurethan und/oder Polyoxymethylen eingesetzt werden.

Die Verwendung einer Verfüllmasse ist vorteilhaft, da diese zum einen die Bauteile verbinden und verkleben kann, wodurch diese Stabilität bietet. Zum anderen kann die Verfüllmasse elastisch und dadurch dämpfend wirken. Zudem verhindert die Verfüllmasse, dass Meerwasser in das Wandlerelement eindringt und insbesondere korrosive Schäden verursachen kann.

Somit ist es vorteilhaft, dass querlaufende Schallwellen und/oder von der Abdeckplatte und/oder dem akustischen Wandlerelement reflektierte Schallwellen von der Verfüllmasse übertragen werden.

Um die Funktionsfähigkeit des Schallwandlers zu gewährleisten, weist das akustische Wandlerelement eine piezoelektrische Keramik und/oder eine piezoelektrische Komposit-Keramik auf.

Wie bereits ausgeführt, wandeln eine piezoelektrische Keramik und/oder eine piezoelektrische Komposit-Keramik den Schalldruck in eine elektrische Spannung um oder gibt bei Anlegen einer elektrischen Spannung ein akustisches Signal ab.

Des Weiteren ist es - wie bereits beschrieben - vorteilhaft, wenn das Material der Abdeckplatte eine mindestens zweifach größere Schallkennimpedanz als die Schallkennimpedanz einer piezoelektrischen Keramik und/oder einer piezoelektrischen Komposit-Keramik aufweist.

In einer weiteren Ausführungsform des Schallwandlers ist vor und/oder hinter dem akustischen Wandlerelement eine Platte mit einem Reflexionsgrad R von kleiner 0,1, insbesondere kleiner 0,05, bevorzugt kleiner 0,02, angeordnet .

Unter "Reflexionsgrad R" wird insbesondere das Verhältnis zwischen reflektierter und einfallender Intensität des Schalldrucks verstanden.

Die Platte vor und/oder hinter dem akustischen Wandlerelement kann als Druckplatte ausgelegt werden, sodass diese dem auftreffenden Schalldruck weitestgehend auf die piezoelektrische Keramik und/oder die piezoelektrische Komposit-Keramik aufprägt.

Zudem wirkt die Platte hinter dem akustischen Wandlerelement als Gegendruckplatte, sodass der Schalldruck auf die zwischen beiden Druckplatten angeordneten keramischen Filamente weiter erhöht wird.

Zudem verhindert die zweite Druckplatte, dass der an der Vorderseite aufgebaute Schalldruck über die keramischen Filamente an nachfolgendes Material übertragen und beispielsweise durch dessen elastische Verformung abgebaut wird.

Dadurch wird insbesondere die (absolute) Empfindlichkeit des Schallwandlers weiter erhöht.

Insbesondere ist es vorteilhaft, wenn die Platte eine schwachschallreflektierende Platte ist, also einen Reflexionsgrad R von kleiner 0,1, insbesondere kleiner 0,05, bevorzugt kleiner 0,02 für Unterwasserschall aufweist.

Entsprechend der Position des akustischen Wandlerelementes kann die vordere Platte oberhalb der Abdeckplatte oder in der Aussparung der Abdeckplatte sitzen.

In einem weiteren Aspekt der Erfindung wird die Aufgabe gelöst durch eine Wandlervorrichtung, welche einen zuvor beschriebenen Schallwandler aufweist.

Dadurch kann eine Schallwandlervorrichtung nach den Bedürfnissen des Benutzers ausgeführt werden, insbesondere kann ein Schallwandler zum Senden und ein weiterer Schallwandler zum Empfangen von Unterwassersignalen verwendet werden.

Zudem kann eine Wandlervorrichtung mit mehreren Schallwandlern optimiert werden, wobei die Schallwandler auf unterschiedliche Empfindlichkeiten eingestellt werden können.

Hierbei kann ein Schallwandler jeweils von einer Abdeckplatte umgeben sein, sodass durch Parallel- und/oder Reihensetzung von mehreren Abdeckplatten mit den zugehörigen Schallwandlern eine Schallwandlervorrichtung ausgestaltet wird oder eine Abdeckplatte kann mehreren Schallwandlern der Schallwandlervorrichtung zugeordnet sein. Im zweiten Fall bleiben insbesondere die oben genannten Breitenabmessungen um jeden Schallwandler bestehen.

In einem weiteren Aspekt wird die Aufgabe gelöst durch ein Sonar zum Empfangen von Wasserschallwellen, wobei das Sonar einen zuvor beschriebenen Schallwandler oder eine zuvor beschriebene Wandlervorrichtung aufweist.

Somit kann eine Ortung von Gegenständen im Raum unter Wasser mittels empfangener Schalldruckwellen bei hoher absoluter und winkelabhängigen Empfindlichkeit erfolgen. Insbesondere können auch verschiedene empfangene Schallsignale, welche zuvor bereits reflektiert wurden und unterschiedliche Auftreffwinkel aufweisen, mit hoher Empfindlichkeit detektiert werden. Dies ist insbesondere bei unbekannten Objekten mit unbekannten Positionen unter Wasser hilfreich.

Unter "Sonar" wird insbesondere ein System zur Ortung von Gegenständen im Raum und unter Wasser mittels ausgesandter und/oder empfangener Schallimpulse verstanden. Dabei kann es sich um ein aktives Sonar handeln, welches selbst ein Signal ausstrahlt, oder um ein passives Sonar, welches ausgestrahlte Schallimpulse empfängt. Ebenso kann es sich hierbei um ein Bi- oder Multistatisches Sonar handeln, welches gleichzeitig auf verschiedenen Plattformen senden und empfangen kann.

Dieser Schallwandler und/oder diese Wandlervorrichtung ist oder sind insbesondere für ein Sonar vorteilhaft, da bei einem Sonar die umgebenden Medien (Wasser) und Materialien wie der akustische Absorber und/oder auch die weiteren Materialien des Wasserfahrzeuges den auftreffenden Schalldruck reflektieren und/oder absorbieren. Durch die erfindungsgemäße Abdeckplatte kann die Empfindlichkeit des Sonars erhöht werden.

In einem zusätzlichen Aspekt der Erfindung wird die Aufgabe gelöst durch ein Wasserfahrzeug, insbesondere ein U-Boot, welches ein zuvor beschriebenes Sonar aufweist.

Insbesondere für ein U-Boot ist es notwendig, dass das Sonar eine hohe Empfindlichkeit zur Navigation und/oder Ortung aufweist. Des Weiteren kann ein U-Boot Schallwellen, aus unterschiedlichsten Richtungen mit hoher Empfindlichkeit detektieren.

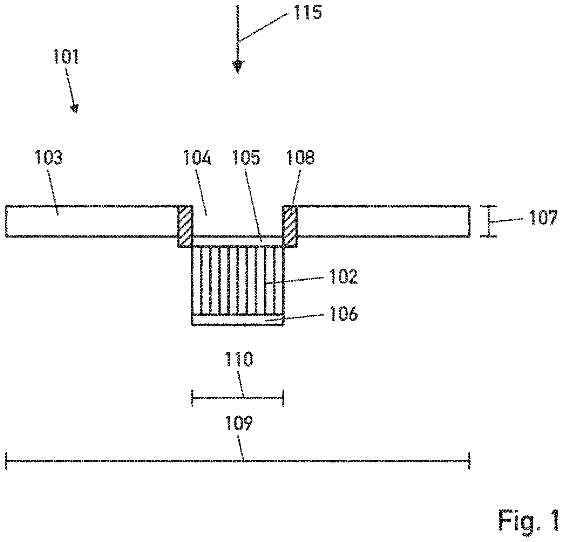

Im Weiteren wird die Erfindung anhand von Ausführungsbeispielen näher erläutert. Es zeigen
- Figur 1: eine stark schematische Schnittdarstellung eines Hydrophons mit Abdeckplatte und Piezokomposit-Keramik und
- Figur 2: eine stark schematische Darstellung der Kennlinien der Empfindlichkeit S eines Hydrophons ohne und mit Wolframplatte über den Auftreffwinkel A.

Ein Hydrophon 101 weist eine Wolframplatte 103 als Abdeckplatte auf, welche in der Mitte eine Aussparung 104 aufweist. In Schalldruckrichtung 115 folgt hinter der Aussparung 104 eine vordere GFK-Platte 105, eine Piezokomposit-Keramik 102 und anschließend eine hintere GFK-Platte 106. Die Aussparung 104 ist seitlich von einer Polyurethan-Masse 108 umgeben, welche den Raum zwischen der Aussparung 104 und der Wolframplatte 103 ausfüllt.

Die Dicke 107 der Wolframplatte 103 beträgt 0,5mm. Die Breite 109 der Wolframplatte 103 beträgt das 5,3-fache der Breite 110 der Piezokomposit-Keramik 102.

Der Hydrophon 101 befindet sich im Bug eines U-Bootes. In Schalldruckrichtung 115 trifft eine Wasserschalldruckwelle, welche bereits am Meeresgrund reflektiert wurde, mit verschiedenen Auftreffwinkeln auf die Wolframplatte 103 und die vordere GFK-Platte 105. Die vordere GFK-Platte 105 ist mit einem Reflexionsgrad R von 0,02 schwach reflektierend ausgelegt, sodass der Schalldruck größtenteils von der Platte als Druckplatte auf die keramischen Filamente der piezoelektrischen Keramik 102 aufgeprägt wird. Durch die piezoelektrische Keramik 102 wird der übertragene Schalldruck in ein elektrisches Signal umgewandelt.

Durch das Material und die Dicke 107 der Wolframplatte 103 sowie deren oben beschriebene geometrische Anordnung wird die Winkelabhängigkeit der Schallreflexion beim Auftreffen des Schalldrucks aus der Schalldruckrichtung 115 auf die vordere GFK-Platte 105 so eingestellt, dass das Hydrophon 101 eine hohe Empfindlichkeit über den gesamten Bereich der Auftreffwinkel aufweist.

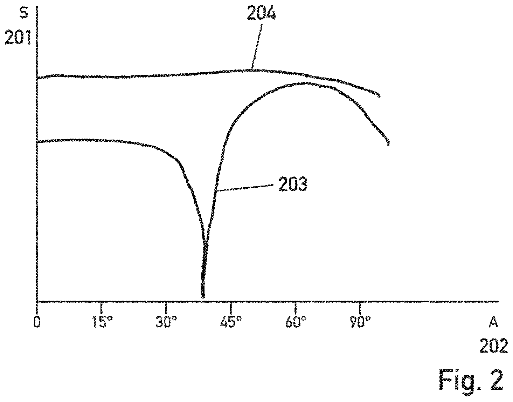

Für ein Hydrophon nach dem Stand der Technik ohne Wolframplatte ist die Empfindlichkeit S (201) über den Auftreffwinkel A (202) in der Kennlinie 203 gezeigt (siehe Figur 2).

Wie aus der Kennlinie 203 ersichtlich ist, ist insbesondere die Empfindlichkeit S eines Hydrophons nach dem Stand der Technik bei einem Auftreffwinkel A zwischen 30° und 45° sehr stark durch die Reflexion des Wasserschalls vermindert.

Dagegen weist die Kennlinie 204 eines erfindungsmäßigen Hydrophons 101 mit Wolframplatte 103 eine gleichmäßig hohe Empfindlichkeit S (291) über dem gesamten Bereich des Auftreffwinkels A (202) von 0° bis 90° auf. Insbesondere tritt hier keine Erniedrigung der Empfindlichkeit S im Bereich der Auftreffwinkel A von 30° bis 45° auf.

Dies ist durch die Parametereinstellung der Wolframplatte 103 bedingt, welche deutlich die Winkelabhängigkeit der Schallreflexion der auftreffenden Wasserschallwellen verbessert, sodass die Empfindlichkeit S des Hydrophons 101 über den gesamten Bereich des Auftreffwinkels A erhöht ist.

### Bezugszeichenliste

- 101: Hydrophon
- 102: Piezokomposit-Keramik
- 103: Wolframplatte
- 104: Aussparung
- 105: vordere GFK-Platte
- 106: hintere GFK-Platte
- 107: Dicke der Wolframplatte
- 108: Polyurethan-Masse
- 109: Breite der Wolframplatte
- 110: Breite der Piezokomposit-Keramik
- 115: Schalldruckrichtung
- 201: Empfindlichkeit S
- 202: Auftreffwinkel A
- 203: Kennlinie der Empfindlichkeit S eines Hydrophons ohne Wolfram-Platte über dem Auftreffwinkel A
- 204: Kennlinie der Empfindlichkeit S eines Hydrophons mit Wolframplatte über dem Auftreffwinkel A

## Patentansprüche

1. Schallwandler (101) zum Empfangen von Wasserschallwellen, welcher ein akustisches Wandlerelement (102) und eine Abdeckplatte (103) aufweist, wobei die Abdeckplatte eine Aussparung (104) und mindestens einen Parameter aufweist, wobei der Parameter eine Dicke (107) und/oder ein Material und/oder eine geometrische Anordnung der Abdeckplatte ist, und der Abdeckplatte das akustische Wandlerelement derart zugeordnet ist, dass eine Wasserschallwelle sowohl auf die Abdeckplatte als auch auf das akustische Wandlerelement trifft, wobei der mindestens eine Parameter der Abdeckplatte derart eingestellt ist, dass bei einer auftreffenden Wasserschallwelle eine Winkelabhängigkeit einer Schallreflexion so eingestellt ist, dass eine winkelabhängige Empfindlichkeit (201) des Schallwandlers erhöht ist, **dadurch gekennzeichnet, dass**
- das akustische Wandlerelement unterhalb der Aussparung oder in der Aussparung sitzt; oder
- die Abdeckplatte eine Schallkennimpedanz aufweist, die mindestens um den Faktor 25 größer ist als die Schallkennimpedanz von Wasser.

2. Schallwandler nach Anspruch 1, **dadurch gekennzeichnet, dass** die Dicke der Abdeckplatte zwischen 0,1mm und 2,0mm, insbesondere zwischen 0,2mm und 0,5mm, eingestellt ist.

3. Schallwandler nach Anspruch 1 oder 2, **dadurch gekennzeichnet, dass** das Material der Abdeckplatte Wolfram und/oder Eisen und/oder Nickel und/oder Molybdän und/oder Chrom und/oder Kobalt und/oder Titan und/oder Mangan umfasst.

4. Schallwandler nach einem der vorherigen Ansprüche, **dadurch gekennzeichnet, das** eine Breite der Abdeckplatte (107) mindestens eine fünffache Breite des akustischen Wandlerelementes (110) aufweist.

5. Schallwandler nach einem der vorherigen Ansprüche, **dadurch gekennzeichnet, dass** zwischen der Abdeckplatte und der Aussparung und/oder dem akustischen Wandlerelement eine Verfüllmasse (108) angeordnet ist.

6. Schallwandler nach einem der vorherigen Ansprüche, **dadurch gekennzeichnet, dass** das akustische Wandlerelement eine piezoelektrische Keramik und/oder eine piezoelektrische Komposit-Keramik (102)aufweist.

7. Schallwandler nach einem der vorherigen Ansprüche, **dadurch gekennzeichnet, dass** vor und/oder hinter dem akustischen Wandlerelement eine Platte mit einem Reflexionsgrad R von kleiner 0,1, insbesondere kleiner 0,05, bevorzugt kleiner 0,02, angeordnet ist.

8. Wandlervorrichtung, **gekennzeichnet durch** einen Schallwandler nach einem der Ansprüche 1 bis 7.

9. Sonar zum Empfangen von Wasserschallwellen, **gekennzeichnet durch** einen Schallwandler nach einem der Ansprüche 1 bis 7 oder einer Wandlervorrichtung nach Anspruch 8.

10. Wasserfahrzeug, insbesondere ein U-Boot, welches ein Sonar nach Anspruch 9 aufweist.

## Claims

1. Sound transducer (101) for receiving waterborne sound waves, which has an acoustic transducer element (102) and a cover plate (103), the cover plate having a recess (104) and at least one parameter, the parameter being a thickness (107) and/or a material and/or a geometric arrangement of the cover plate, and the acoustic transducer element being associated with the cover plate in such a way that a waterborne sound wave strikes both the cover plate and the acoustic transducer element, wherein the at least one parameter of the cover plate is set such that, in the case of an incident waterborne sound wave, an angular dependence of a sound reflection is set such that an angle-dependent sensitivity (201) of the sound transducer is increased, **characterised in that**
- the acoustic transducer element is located below the recess or in the recess; or
- the cover plate has a sound characteristic impedance which is greater than the sound characteristic impedance of water by a factor of at least 25.

2. Sound transducer according to claim 1, **characterised in that** the thickness of the cover plate is set between 0.1 mm and 2.0 mm, in particular between 0.2 mm and 0.5 mm.

3. Sound transducer according to claim 1 or 2, **characterised in that** the material of the cover plate comprises tungsten and/or iron and/or nickel and/or molybdenum and/or chromium and/or cobalt and/or titanium and/or manganese.

4. Sound transducer according to one of the preceding claims, **characterised in that** a width of the cover plate (107) has at least five times the width of the acoustic transducer element (110).

5. Sound transducer according to one of the preceding claims, **characterised in that** a filling compound (108) is arranged between the cover plate and the recess and/or the acoustic transducer element.

6. Sound transducer according to one of the preceding claims, **characterised in that** the acoustic transducer element comprises a piezoelectric ceramic and/or a piezoelectric composite ceramic (102).

7. Sound transducer according to one of the preceding claims, **characterised in that** a plate with a reflection coefficient R of less than 0.1, in particular less than 0.05, preferably less than 0.02, is arranged in front of and/or behind the acoustic transducer element.

8. Transducer device, **characterised by** an sound transducer according to one of claims 1 to 7.

9. Sonar for receiving waterborne sound waves, **characterised by** a sound transducer according to one of claims 1 to 7 or a transducer device according to claim 8.

10. Watercraft, in particular a submarine, comprising a sonar according to claim 9.

## Revendications

1. Transducteur acoustique (101) pour recevoir des ondes sonores de l'eau, qui présente un élément transducteur acoustique (102) et une plaque de recouvrement (103), la plaque de recouvrement présentant un évidement (104) et au moins un paramètre, le paramètre étant une épaisseur (107) et/ou un matériau et/ou une disposition géométrique de la plaque de recouvrement, et l'élément transducteur acoustique étant associé à la plaque de recouvrement de telle manière, qu'une onde acoustique de l'eau frappe aussi bien la plaque de recouvrement que l'élément de transducteur acoustique, l'au moins un paramètre de la plaque de recouvrement étant réglé de telle sorte que, pour une onde acoustique de l'eau incidente, une dépendance angulaire d'une réflexion acoustique est réglée de telle sorte qu'une sensibilité (201) du transducteur acoustique dépendant de l'angle est augmentée, **caractérisé en ce que**
- l'élément transducteur acoustique est placé sous l'évidement ou dans l'évidement ; ou
- la plaque de recouvrement présente une impédance caractéristique acoustique qui est au moins 25 fois supérieure à l'impédance caractéristique acoustique de l'eau.

2. Transducteur acoustique selon la revendication 1, **caractérisé en ce que** l'épaisseur de la plaque de recouvrement est réglée entre 0,1 mm et 2,0 mm, en particulier entre 0,2 mm et 0,5 mm.

3. Transducteur acoustique selon la revendication 1 ou 2, **caractérisé en ce que** le matériau de la plaque de recouvrement comprend du tungstène et/ou du fer et/ou du nickel et/ou du molybdène et/ou du chrome et/ou du cobalt et/ou du titane et/ou du manganèse.

4. Transducteur acoustique selon l'une quelconque des revendications précédentes, **caractérisé en ce qu'**une largeur de la plaque de recouvrement (107) est au moins égale à cinq fois la largeur de l'élément de transduction acoustique (110).

5. Transducteur acoustique selon l'une des revendications précédentes, **caractérisé en ce qu'**une masse de remplissage (108) est disposée entre la plaque de recouvrement et l'évidement et/ou l'élément transducteur acoustique.

6. Transducteur acoustique selon l'une des revendications précédentes, **caractérisé en ce que** l'élément transducteur acoustique comprend une céramique piézoélectrique et/ou une céramique piézoélectrique composite (102).

7. Transducteur acoustique selon l'une des revendications précédentes, **caractérisé en ce qu'**une plaque ayant un coefficient de réflexion R inférieur à 0,1, notamment inférieur à 0,05, de préférence inférieur à 0,02, est disposée devant et/ou derrière l'élément transducteur acoustique.

8. Dispositif transducteur, **caractérisé par** un transducteur acoustique selon l'une des revendications 1 à 7.

9. Sonar pour la réception d'ondes sonores aquatiques, **caractérisé par** un transducteur acoustique selon l'une des revendications 1 à 7 ou un dispositif transducteur selon la revendication 8.

10. Véhicule nautique, notamment un sous-marin, comportant un sonar selon la revendication 9.
